# FASCICULE DE BREVET EUROPEEN

(11) **EP 0 700 850 B1**
(45) Date de publication et mention de la délivrance du brevet: **06.05.1998**
(21) Numéro de dépôt: 95402036.8
(22) Date de dépôt: 08.09.1995
(51) Int. Cl.: B65G 51/04, B65G 51/36

(54) **Appareil d'extraction d'objets immobilises dans un reseau de transfert pneumatique**
Vorrichtung zum Entfernen von immobilisierten Gegenständen aus einer pneumatischen Rohrpostanlage
Apparatus for removal of immobilized objects out of a pneumatic tube conveyor system

(30) Priorité: 12.09.1994 FR 9410848
(43) Date de publication de la demande: 13.03.1996
(73) Titulaire: COMPAGNIE GENERALE DES MATIERES NUCLEAIRES, F-78140 Velizy Villacoublay (FR)
(72) Inventeur: Herbreteau, Michel, F-50100 Cherbourg (FR); Marchand, Robert, F-50120 Equeurdreville (FR)
(74) Mandataire: Dubois-Chabert, Guy

(56) Documents cités:
- GB-A- 2 064 460
- US-A- 2 957 723

## Description

L'invention concerne un appareil d'extraction d'objets immobilisés dans un réseau de transfert pneumatique (voir US-A-2 957 723).

Une application concrètement envisagée est celle des réseaux reliant un poste à un autre d'une installation d'analyse d'échantillons liquides radioactifs qui sont transportés dans des récipients clos. Il arrive en effet que ces récipients se bloquent dans les conduits. On réparait jusqu'à présent ces incidents en démontant le tronçon de conduit endroit du blocage du reste du réseau. Une telle opération est cependant assez longue à cause des précautions que les radiations provenant du récipient nécessitent de prendre, et l'irradiation du personnel d'opération ne peut pas être évitée complètement. Dans certains cas, le conduit doit être sacrifié et remplacé par un autre. Le volume de déchets est alors important, surtout si on a disposé des moyens de fermeture aux extrémités du conduit, qu'on doit aussi sacrifier, d'autant plus que les fûts plombés ordinaires ne conviennent pas à cause des dimensions excessives des conduits et qu'il faut donc avoir recours à d'autres.

On éprouve donc le besoin d'extraire aisément et rapidement les objets bloqués. C'est à cette nécessité que satisfait l'invention. Dans sa réalisation préférée, elle concerne un appareil composé pour l'essentiel d'un tuyau souple portant un raccord à unir aux raccords de tronçons à une extrémité, d'un récipient blindé aux radiations à l'extrémité opposée du tuyau, et d'un aspirateur relié au tuyau à travers le récipient blindé.

Dans un mode préféré de l'invention, l'aspirateur est réversible et peut faire office de refouleur, afin de renvoyer l'objet aspiré dans un autre tube du réseau, normalement un tuyau de décharge.

On va maintenant décrire une réalisation particulière de l'invention plus en détail à l'aide des figures suivantes annexées à titre illustratif et non limitatif :

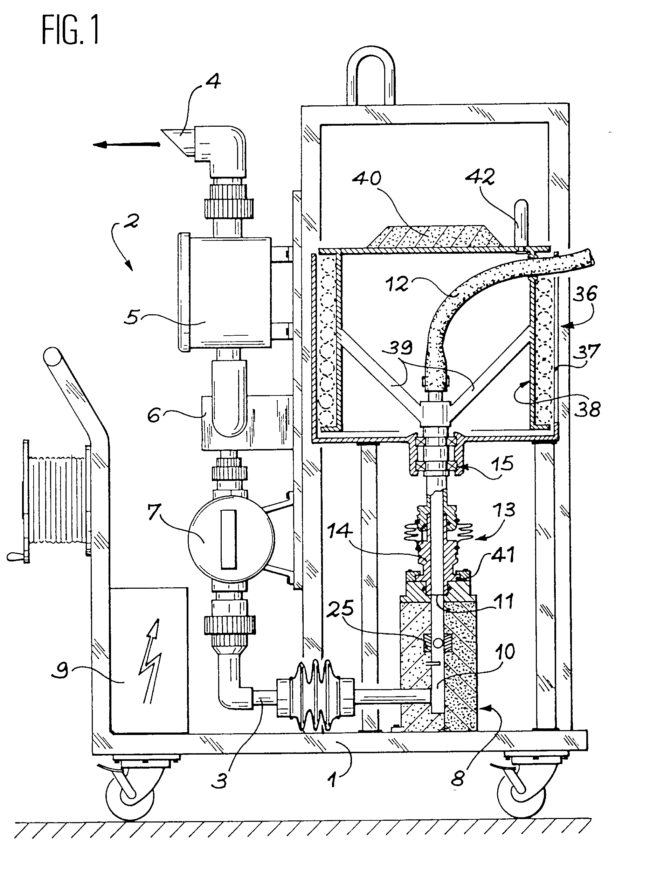

- la figure 1 est une vue générale d'une réalisation de l'appareil hormis l'embout de raccordement aux tronçons,
- les figures 2 et 2A illustrent l'embout de l'appareil dans deux états différents, et
- les figures 3A à 3E illustrent les étapes du procédé.

L'appareil est juché sur un chariot 1 mobile. Il comprend un ensemble d'aspiration 2 dont les éléments se succèdent le long d'un tuyau d'aspiration 3. Ces éléments comprennent principalement un embout d'aspiration 4, une soufflante 5, une électrovanne 6, un filtre 7, et le tuyau d'aspiration 3 se raccorde ensuite à la base d'un récipient blindé 8. Une armoire électrique 9 est située à côté de l'ensemble d'aspiration 2 et fournit de l'énergie électrique à la soufflante 5 en particulier.

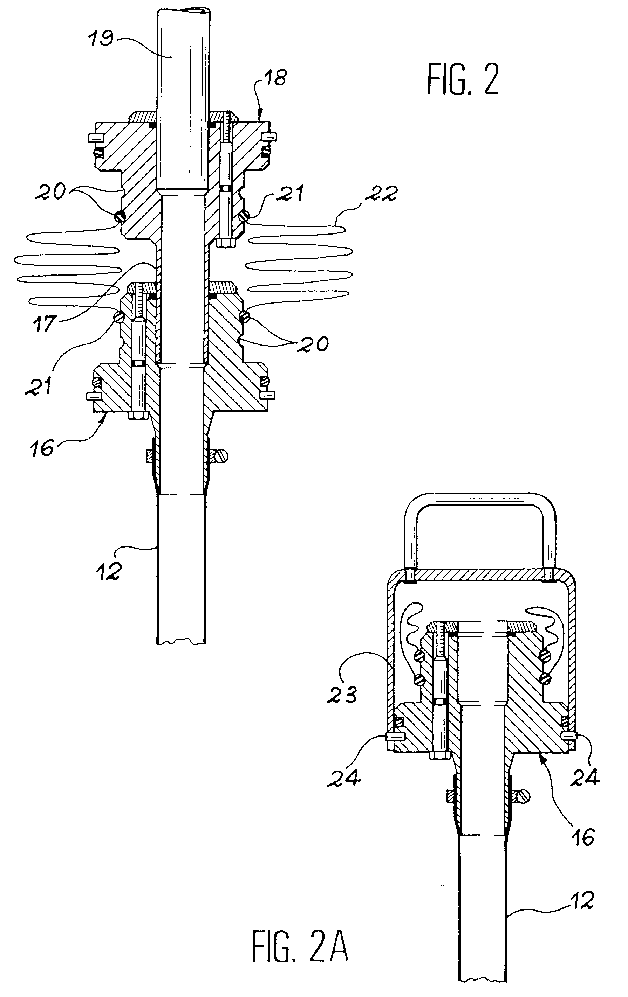

Le tuyau d'aspiration 3 aboutit au fond d'une cavité 10 ménagée dans le récipient blindé 8 et qui comporte une ouverture 11 supérieure reliée à une extrémité de tuyau souple 12 par un tuyau de raccordement 13 qui peut comprendre une bride 14 de liaison au récipient blindé 8, et un joint rotatif 15 pour permettre à un tambour externe 36 de tourner. Ce tambour externe 36 entoure l'extrémité du tuyau souple 12 et est entaillé d'une fente verticale 37 pour laisser passer celui-ci. De plus, il entoure un tambour interne 38 qui lui est concentrique et monté au tuyau de raccordement 13 par des étais 39. Si on tourne le tambour externe 36 en agrippant des poignées non représentées sur son pourtour ou sous son fond, le tuyau souple 12 est enroulé en spires logées dans l'espace annulaire entre les deux tambours 36 et 38. Un blindage 40 surmonte le couvercle du tambour interne 38 et arrête les radiations émises de la cavité 10 par l'ouverture 11 et dans l'axe du tuyau de raccordement 13. Le tambour interne 38 est lui-même tournant, car le tuyau de raccordement 13, dont il est solidaire, est posé sur le récipient blindé 8 par l'entremise d'un palier tournant 41. Son couvercle porte encore une poignée 42. Si on tourne les deux tambours 36 et 38 d'un même angle, le tuyau souple 12, qui traverse un perçage de la paroi du tambour interne 38, est orienté vers une autre direction sans que le chariot 1 soit déplacé. Le tuyau souple 12 est terminé (figures 2 et 2A) par un embout comprenant surtout une bride de raccordement 16 qui peut être enfilée autour d'un embout 17 d'une bride complémentaire 18 d'un tronçon 19 de réseau de transfert pneumatique. La bride de raccordement 16 est creusée de deux gorges 20 qui reçoivent les extrémités épaissies et élastiques 21 d'un joint en soufflet 22. Quand le raccordement des brides est fait, une des extrémités du joint en soufflet 22 est toutefois retirée de la bride 16 et installée dans une gorge 20 semblable de la bride complémentaire 18. L'étanchéité entre les brides 16 et 18 est donc garantie par le joint en soufflet 22. Mais quand l'appareil est au repos et que la bride de raccordement 16 est détachée (figure 2A), un capot 23 coiffe la bride de raccordement 16 et ferme donc le tuyau souple 12. Il peut être retenu par des entailles en baïonnette engagées sur des tétons 24 de la bride de raccordement 16.

La cavité 10 porte un capteur 25 de présence d'un objet dans la cavité 10.

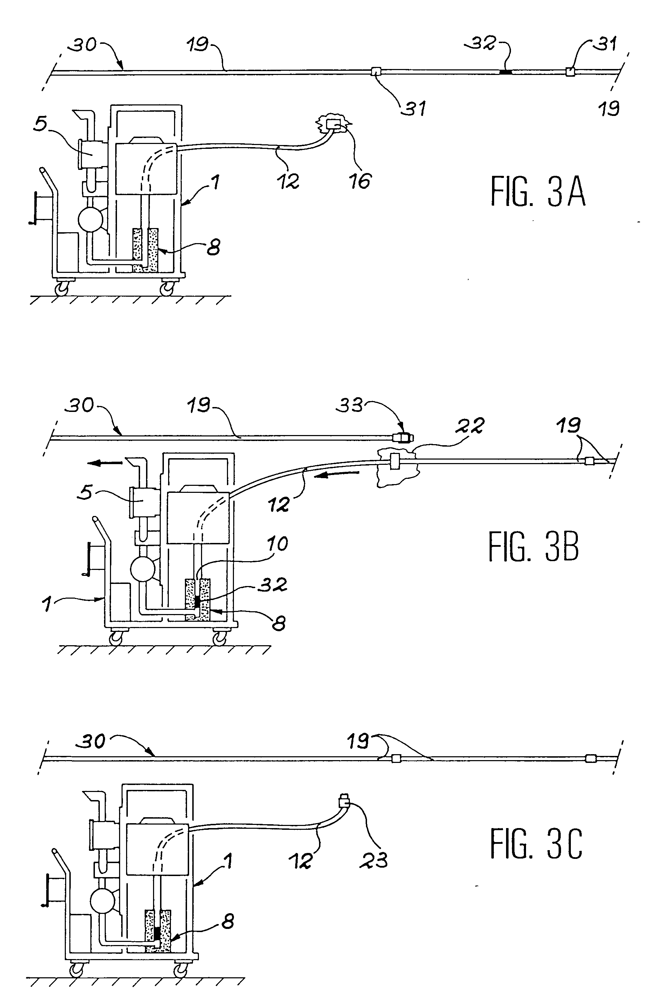

Comme on le voit sur les figures 3A à 3E, l'appareil est approché d'un réseau de transfert pneumatique 30 composé de tronçons 19 aboutés au moyen de raccords 31 composés d'une bride complémentaire 18 à l'extrémité amont de chacun des tronçons 19 et d'une bride non représentée mais analogue à la bride de raccordement 16 à l'extrémité aval de chacun des tronçons 19. L'un des tronçons 19 est occupé par un récipient de transport 32 qui y est bloqué.

La figure 3B représente l'état de l'installation à une étape suivante. Le tronçon 19 endroit du blocage a été démonté du tronçon 19 immédiatement à l'amont, et a été relié à la place au tuyau souple 12 de la façon illustrée à la figure 2. Le joint à soufflet 22 a été mis en place et un sac de protection 33 a éventuellement été installé à l'extrémité libre du tronçon 19 en amont. Puis une action de la soufflante 5 a permis d'aspirer le récipient 32, ce qui est normalement possible puisqu'on lui fait accomplir un trajet semblable à celui qu'il a déjà fait mais en sens inverse. Le récipient 32 arrive au fond de la cavité 10 du récipient blindé 8 et s'y arrête. On peut alors, comme on le représente à la figure 3C, rétablir la continuité du réseau de transfert pneumatique 30 après avoir démonté le tuyau souple 12 et replacé le capot 23 autour de la bride de raccordement 16 pour refermer le tuyau souple 12. On évite ainsi, conjointement au filtre 7, de répandre à l'extérieur les pollutions que le récipient 32 pourrait causer. Les radiations qu'il émet sont absorbées par le récipient blindé 8.

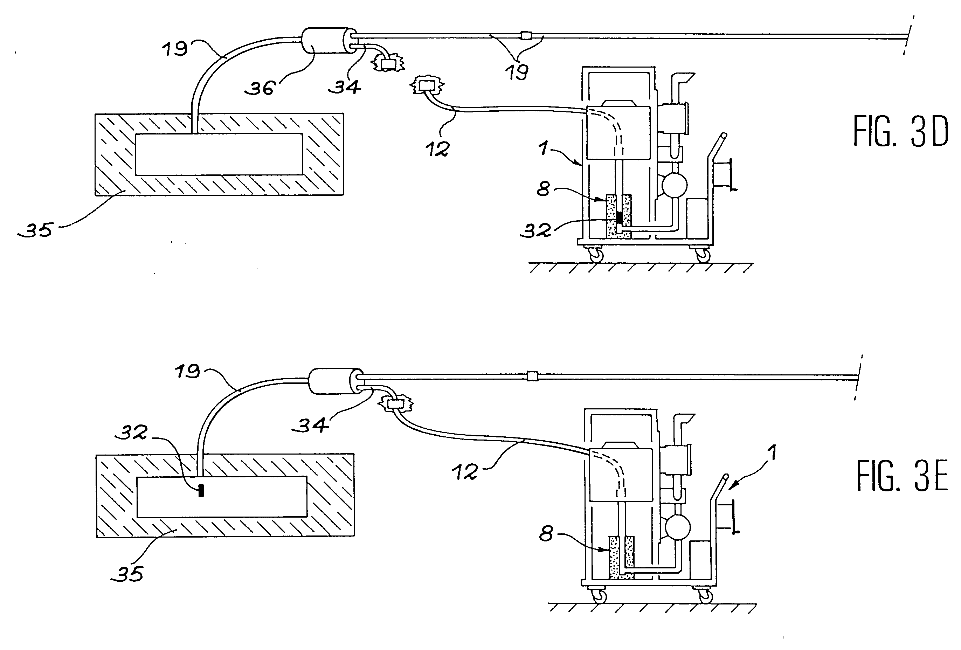

On a alors tout le temps pour amener (figure 3D) l'appareil à un tronçon d'évacuation 34 relié à une installation de rebut 35 et qui peut être joint à d'autres tronçons 19 du réseau de transfert pneumatique formant une ligne continue par un raccord à barillet 36. De la même façon que pour la figure 3B, on relie le tuyau souple 12 au tuyau d'évacuation 34 par leurs brides, et la soufflante 5 est mise en action en sens inverse (ce qui peut être réalisé sans problème en inversant l'alimentation aux bornes du moteur électrique qui l'entraîne), et le récipient 32 est refoulé et propulsé hors de la cavité 10 vers le tuyau souple 12, le tuyau d'évacuation 34 et l'installation de rebut 35, ce que représente la figure 3E.

On s'aperçoit que les seules opérations qui exposent aux irradiations consistent en un démontage des brides à l'amont du tronçon 19 endroit du blocage et en un raccordement du tuyau souple 12, après quoi le récipient 32 est plongé dans le récipient blindé 8 et les opérateurs sont abrités. Comme ces opérations sont brèves, elles ne sont guère dangereuses. On remarquera aussi que le tuyau souple 12 permet non seulement de raccorder facilement l'appareil au réseau de transfert pneumatique, mais de disposer le chariot 1 et les opérateurs à l'écart des lieux dangereux.

## Revendications

1. Appareil d'extraction d'objets (32) immobilisés dans un réseau de transfert pneumatique (30) composé de tronçons (19) terminés par des raccords (31) unis entre eux, caractérisé en ce qu'il comprend un tuyau souple (12) portant un raccord (16) à unir aux raccords de tronçons à une extrémité, un récipient blindé (8) aux radiations radioactives à une extrémité opposée, et un moyen d'aspiration (5) relié au tuyau (12) à travers le récipient blindé (8).

2. Appareil d'extraction suivant la revendication 1, caractérisé en ce que le moyen d'aspiration est réversible, pouvant faire office de refouleur et le tuyau souple (12) est aligné avec une cavité (10) du récipient blindé (8) dans laquelle les objets (32) sont aspirés.

3. Appareil d'extraction suivant l'une quelconque des revendications 1 ou 2, caractérisé en ce qu'il comprend un capteur (25) de présence d'objets (32) dans le récipient blindé (8).

4. Appareil d'extraction suivant l'une quelconque des revendications 1 à 3, caractérisé en ce qu'il comprend un tambour tournant (36) d'enroulement du tuyau souple (12).

5. Appareil d'extraction suivant l'une quelconque des revendications 1 à 4, caractérisé en ce qu'il comprend un moyen tournant (38) pour orienter le tuyau souple (12).

6. Appareil d'extraction suivant les revendications 4 et 5, caractérisé en ce que le moyen tournant (38) est un tambour concentrique au tambour tournant d'enroulement (36).

7. Appareil d'extraction suivant l'une quelconque des revendications 1 à 6, caractérisé par un blindage aux radiations (40) devant une ouverture (11) du récipient blindé (8) à laquelle se raccorde le tuyau souple (12).

8. Procédé d'extraction d'un objet radioactif (32) immobilisé dans un réseau de transfert pneumatique (30) composé de tronçons (19) accouplés et en prolongement, terminés par des raccords (31) unis entre eux, consistant à ouvrir le réseau en désaccouplant deux des tronçons (19) uniquement en amont de l'endroit où l'objet radioactif (32) est bloqué, caractérisé en ce qu'il consiste à accoler un tuyau (12) d'un appareil d'aspiration selon la revendication 1 au tronçon désaccouplé du coté de l'objet radioactif (32), et à aspirer l'objet radioactif dans le tuyau puis dans un récipient blindé aux radiations, relié au tuyau, de l'appareil.

9. Procédé d'extraction et de mise au rebut d'un objet (32) immobilisé dans un réseau de transfert pneumatique (30), caractérisé en ce qu'il consiste, après avoir extrait l'objet selon la revendication 8, à accoler le tuyau (12) à un conduit d'évacuation (34), puis à chasser l'objet du récipient blindé dans le tuyau (12) puis dans le conduit d'évacuation par un soufflage de gaz.

## Claims

1. Apparatus for the extraction of objects (32) immobilized in a pneumatic transfer network (30) formed from sections (19) terminated by interconnected couplings (31), characterized in that it incorporates a flexible pipe (12) carrying a coupling (19) to be joined to the couplings of sections at one end, a radioactive radiation-shielded container (8) at an opposite end and a suction means (5) connected to the pipe (12) through the shielded container.

2. Extraction apparatus according to claim 1, characterized in that the suction means is reversible and can serve as a discharger and the flexible pipe (12) is aligned with a cavity of the shielded container (8) into which the objects (32) are sucked.

3. Extraction apparatus according to either of the claims 1 and 2, characterized in that it incorporates a sensor (25) for sensing the presence of objects (32) in the shielded container (8).

4. Extraction apparatus according to any one of the claims 1 to 3, characterized in that it incorporates a rotary drum (36) for winding up the flexible pipe (12).

5. Extraction apparatus according to any one of the claims 1 to 4, characterized in that it incorporates a rotary means (38) for orienting the flexible pipe (12).

6. Extraction apparatus according to either of the claims 4 and 5, characterized in that the rotary means (38) is a drum concentric to the rotary winding drum (36).

7. Extraction apparatus according to any one of the claims 1 to 6, characterized by a radiation shield (40) in front of an opening (11) of the shielded container (8), to which is connected the flexible pipe (12).

8. Process for the extraction of a radioactive object (32) immobilized in a pneumatic transfer network (30), formed by coupled sections (19), in extension, terminated by interconnected couplings (31), consisting of opening the network by uncoupling two of the sections (19) solely upstream of the location where the radioactive object (32) is blocked, characterized in that it consists of connecting a pipe (12) of a suction apparatus according to claim 1 to the uncoupled section on the side of the radioactive object (32) and sucking said radioactive object into the pipe and then into a radiation-shielded container connected to the pipe of the apparatus.

9. Process for the extraction and discarding of an object (32) immobilized in a pneumatic transfer network (30), characterized in that it consists, after having extracted the object according to claim 8, connecting the pipe (12) to a discharge pipe (34), then expelling the object from the shielded container into the pipe (12) and then into the discharge pipe by gas blowing.

## Patentansprüche

1. Vorrichtung zum Entfernen von immobilisierten Gegenständen (32) aus einer pneumatischen Rohrpost- bzw. Rohrtransferanlage (30), zusammengesetzt aus Teilstücken (19), die durch miteinander verbundene Kuppelstücke (31) enden,
**dadurch gekennzeichnet,**
daß sie einen biegsamen Schlauch (12) enthält, der an einem Ende ein Kuppelstück (16), welches mit den Kuppelstücken der Teilstücke verbunden werden kann, und am entgegengesetzten Ende einen die radioaktiven Strahlungen abschirmenden Rezipienten (8) umfaßt, und eine Saugeinrichtung (5), die durch den abschirmenden Rezipienten (8) mit dem Schlauch (12) verbunden ist.

2. Vorrichtung nach Anspruch 1, dadurch gekennzeichnet, daß die Saugeinrichtung reversibel bzw. umsteuerbar ist und als Verdrängungseinrichtung arbeiten kann und der biegsame Schlauch (12) mit einem Hohlraum (10) des abschirmenden Rezipienten (8) fluchtet, in den die Gegenstände (32) gesaugt werden.

3. Vorrichtung nach einem der Ansprüche 1 oder 2, dadurch gekennzeichnet, daß sie einen Sensor (25) zur Feststellung von Gegenständen (32) in dem abschirmenden Rezipienten (8) umfaßt.

4. Vorrichtung nach einem der Ansprüche 1 bis 3, dadurch gekennzeichnet, daß sie eine drehbare Aufwickeltrommel (36) des biegsamen Schlauchs (12) umfaßt.

5. Vorrichtung nach einem der Ansprüche 1 bis 4, dadurch gekennzeichnet, daß sie eine drehbare Einrichtung (38) umfaßt, um den biegsamen Schlauch (12) auszurichten.

6. Vorrichtung nach den Ansprüchen 4 und 5, dadurch gekennzeichnet, daß die drehbare Einrichtung (38) eine zur drehbaren Aufwickeltrommel (36) konzentrische Trommel ist.

7. Vorrichtung nach einem der Ansprüche 1 bis 6, gekennzeichnet durch eine Strahlungsabschirmung (40) vor einer Öffnung (11) des abschirmenden Rezipienten (8), an den der biegsame Schlauch (12) angeschlossen ist.

8. Verfahren zum Entfernen eines immobilisierten Gegenstands (32) aus einer pneumatischen Rohrtransferanlage (30), zusammengesetzt aus gekuppelten, sich fortsetzenden Teilstücken (19), die durch miteinander verbundene Kuppelstücke (31) enden, darin bestehend, die Anlage zu öffen, indem man nur oberhalb der Stelle, wo der radioaktive Gegenstand (32) immobilisiert ist, zwei der Teilstücke (19) entkuppelt,
**dadurch gekennzeichnet,**
daS man einen Schlauch (12) einer Saugvorrichtung nach Anspruch 1 an das entkuppelte Teilstück anfügt, in dem sich der radioaktive Gegenstand (32) befindet, den radioaktiven Gegenstand in den Schlauch und dann in einen die Strahlungen abschirmenden, mit dem Schlauch der Vorrichtung verbundenen Rezipienten saugt.

9. Verfahren zum Entfernen und Entsorgen eines immobilisierten Gegenstands (32) aus einer pneumatischen Rohrtransferanlage (30), dadurch gekennzeichnet, daß es darin besteht, daß man nach dem Entfernen des Gegenstands nach Anspruch 8 das Rohr (12) an eine Entsorgungsleitung (34) anfügt und dann den Gegenstand durch Blasen eines Gases aus dem abschirmenden Rezipienten in den Schlauch (12) und dann in die Entsorgungsleitung preßt.
